# EUROPEAN PATENT APPLICATION

(11) **EP 4 632 452 A1**
(43) Date of publication of application: **15.10.2025**
(21) Application number: 24170053.3
(22) Date of filing: 12.04.2024
(51) Int. Cl.: G02B 6/13, B23K 26/08

(54) **METHOD AND APPARATUS FOR GENERATING A PHOTONIC ELEMENT BY SIMULTANEOUSLY USING TWO LASER DIRECT WRITING BEAMS**

(71) Applicant: Carl Zeiss SMT GmbH, 73447 Oberkochen (DE); Carl Zeiss SMS Ltd., 2015600 Misgav (IL)
(72) Inventor: WEI, Shao-Chi, 07745 Jena (DE); OSHEMKOV, Sergey, 2015600 Misgav (IL); RICHTER, Stefan, 07745 Jena (DE); SCHERUEBL, Thomas Franz Karl, 2015600 Misgav (IL); SPENGLER, Diana, 73447 Oberkochen (DE)
(74) Representative: Bardehle Pagenberg Partnerschaft mbB Patentanwälte Rechtsanwälte

(57) **Abstract**

The present application refers to a method (1400) and an apparatus (100, 1200, 1300) for generating a photonic element (190) by simultaneously using at least two laser direct writing beams (123). The method (1400) comprises: (a) simultaneously focussing (1420) the at least two laser direct writing beams (123) into a sample (140) at least at two positions for locally changing at least one property (145) of the sample (140) at the at least two positions; (b) moving (1430) the at least two laser direct writing beams (123) relative to the sample (140) for generating the photonic element (190); and (c) individually controlling (1440) each one of the at least two laser direct writing beams (123).

## Description

### 1. Field of the invention

The present invention relates to the field of generating a photonic element by simultaneously using at least two laser direct writing beams. In particular, the present invention refers to a method and an apparatus for generating at least two optical waveguides in parallel in a sample by simultaneously using at least two laser direct writing beams.

### 2. Background of the invention

As a result of the constantly increasing integration density in the semiconductor industry, the amounts of data to be processed within an integrated circuit and to be transmitted between different integrated circuits for processing rises. Presently, artificial intelligence (AI), machine learning (ML), and/or high-performance computing (HPC) drive this trend. At the same time, copper interconnects are reaching their bandwidth-distance limits. Further, transmitting very high data rates across copper interconnects requires large amounts of electrical energy and results in large heat quantities which must be removed from the integrated circuits. Moreover, using copper circuits for high-speed data transmission results in signal degradation and distortion which become more pronounced as the transmission length within and between integrated circuits increases.

Optical fibers are very efficient in transporting huge volumes of data across large distances. They have a refractive index profile for guiding the light of the optical transmission using internal total reflection. However, this kind of data transport requires converting electrical signals into optical counterparts, coupling the optical signals into fibers and reconverting the optical signals into electrical ones at the end of the transmission. These conversion processes and the coupling of the optical signal into fibers cause loss. The loss contributions can be tolerated for long distance transmissions. However, in the short or medium distance regime, these losses become more prominent. Furthermore, it is impractical to use optical fibers for short and medium distances. Thus, an alternative to optical fibers is needed as a transmission medium for transmitting large amounts of data across short and medium distances.

Optical waveguides formed in transparent dielectric or glass substrates have the potential to transmit huge amounts of data at high speed. Similarly to optical fibers, they can use the principle of internal total reflection for guiding light along the waveguide. Therefore, optical waveguides have the potential be used as key components in co-packaged optics (CPO) which heterogeneously integrates optics and silicon on a single packaged substrate. CPO addresses future bandwidth and power challenges. Thus, efficiently fabricating high performance optical waveguides is a key towards CPO.

Davis et al.: "Writing waveguide in glass with femtosecond laser", Opt. Lett., Vol. 21, No. 21, pp. 1729-1731, Nov. 1996 discloses that waveguides can be written in glass using a femtosecond laser. Investigations of T.T. Fernandez et al. revealed that waveguides are formed mainly due to structural changes along with ion migration upon laser inscription (T.T. Fernandez et al.: "Revisiting ultrafast laser inscribed waveguide formation in commercial alkali-free borosilicate glasses", Optics Express, Vol. 28, No. 7, p. 10153, 2020).

The patents US 11415 749 B2, US 11131863 B2, US 11 099 329 B1, US 10 698 164 B2, and US 10 564 441 B2 are examples of optical components fabricated at least partly by using laser direct writing. Further, the article of N. Psaila et al.: "3D laser direct writing for advanced photonic integration", Optical Interconnects XIX, edited by H. Schroder, R.T. Chen, Proc. SPIE Vol. 10924, 109240U, explains inscribing straight and curved waveguides in a glass substrate. These documents describe using a single laser beam for sequentially writing waveguides or other structures into glass substrates.

It is therefore one objective of the present invention to provide a method and an apparatus for improving the generation of photonic elements.

### 3. Summary of the invention

According to a first aspect of the invention, a method according to claim 1 is provided for solving the above problems at least partly. In a second aspect, an apparatus according to claim 17 is provided for generating a photonic element which can be used for at least partly overcoming the above-mentioned problem.

In an embodiment, a method for generating a photonic element by simultaneously using at least two laser direct writing beams comprises: (a) simultaneously focussing the at least two laser direct writing beams into a sample at least at two positions for locally changing at least one property of the sample at the at least two positions; (b) moving the at least two laser direct writing beams relative to the sample for generating the photonic element; and (c) individually controlling each one the at least two laser direct writing beams.

Parallelizing several (e.g., two or more) scans for inscribing structures in a sample enables boosting the manufacturing process in several directions. Firstly, the time for fabricating photonic elements can significantly be reduced by using a multi-beam comprising two or more laser direct writing beams. Secondly, the quality of the photonic element can be augmented by reducing the number of scans necessary for its fabrication. Thirdly, the flexibility of the manufacturing process can be increased if one of more parameters of the various laser direct writing beams can be set individually for generating a photonic element.

The at least two positions can be laterally different positions in the sample, i.e., can have a predetermined lateral distance between the focus spots of the at least two laser direct writing beams, or the focus spots at most partially laterally overlap. The term "laterally" means a direction which is essentially perpendicular to the propagation direction of the at least two laser direct writing beams.

Further, the at least two positions may be vertically different positions in the sample, i.e., their focus spot may be in different depths below a sample surface or may be essentially in the same depth. The term "vertically" means a direction which is essentially parallel to the propagation direction of the at least two laser direct writing beams.

The at least two positions of the at least two focus spots may laterally and/or vertically be constant during scanning of the at least two laser direct writing beams relative to the sample. The at least two positions of the at least two focus spots may laterally and/or vertically vary during a scan of the at least two laser direct writing beams.

Within this application, the term "essentially" means "within currently typical design, measurement, and manufacturing tolerances".

Further, the term "simultaneous" or "simultaneously" can be implemented in cases in which the light of the at least two beams hits the sample at the same time. Also, it can be implemented, e.g., in case of pulses (e.g. femtosecond pulses) of a first beam being applied to the sample in between two respective subsequent pulses (e.g. femtosecond pulses) of a second beam. This can be realized using a multi-beam which comprises at least two laser direct writing beams generated either from a single laser beam source by splitting or separating a single laser direct writing beam or by using at least two laser direct writing beams generated by at least two laser beam sources (which may e.g. be synchronized).

Moreover, a laser direct writing beam has in its focus or its focus spot an optical intensity which is high enough to induce nonlinear absorption processes, and thus may cause a local modification in the sample. The local modification may causes a local change of at least one property of the sample. The at least two laser direct writing beams may cause a local modification at the at least two positions in the sample. The local modification may comprise a local optical breakdown. The at least two laser direct writing beams may comprise at least two femtosecond laser direct writing (FLDW) beams.

Compared to prior art systems, this may have the advantage that photonic elements may be generated by the (F)LDW beams, essentially without further processing or etching steps. Moreover, in view of the independent control of the (F)LDW beams, a particular flexibility of the usage of the multi-beams may be achieved.

It is noted that the step of (a) simultaneously focussing the at least two laser direct writing beams into a sample at least at two positions for locally changing at least one property of the sample at the at least two positions is not mandatory. Generally, it may be replaced by the step of focussing at least one laser direct writing beam into a sample at at least one position for locally changing at least one property of the sample at the at least one position. Also on this case, the various further features described herein may be used in combination with the various methods as described herein.

The photonic element may comprise at least one element of: at least one optical waveguide, at least one microlens, at least one coupling element, at least one wavelength selective element, at least one tapered waveguiding structure, at least one diffraction optical element, at least one expanded waveguiding structure, or at least one fiber alignment structure.

The coupling element may comprise at least one of a grating coupling element or an evanescent wave coupling element. The wavelength selective element may comprise a fiber Bragg grating (FBG).

The at least one property may comprise at least one of: a local refractive index change, a local material density change, a local material composition change, a local surface change, or a local front side change.

A local material density change and/or a local material composition change may result in a local refractive index change. A local refractive index change may comprise a change of the real part and of the imaginary part of the refractive index of the sample. A sample is selected so that the change of the at least one property of the sample, predominantly change the real part of the refractive index and does essentially not change the imaginary part of the refractive index.

Changing the at least one property of the sample may comprise a three-dimensional (3D) change of the at least one property.

Moving the at least two laser direct writing beams relative to the sample may comprise at least one of continuously moving the sample relative to the at least two laser direct writing beams, discontinuously moving the sample relative to the at least two laser direct writing beams, or a combination of both.

Preferably the sample is moved with respect to the at least two laser direct writing beams which are fixed typically. But it is also possible to move the at least two laser direct writing beams with respect to the sample. A combined movement of both, the beams and the sample are also conceivable. For example, the sample by be moved in the lateral directions, and the two or more laser direct writing beams may be moved in the vertical direction.

The photonic element may comprise at least one of: a straight optical waveguide, a bent optical waveguide, a tapered optical waveguide, or an expanded optical waveguide.

A radius of curvature or a bent radius of the bent optical waveguide may be smaller than 20 mm, preferably smaller than 10 mm, more preferably smaller than 5 mm, and most preferably smaller than 3 mm.

The bent optical waveguide may be bent in at least one of: a direction perpendicular to the beam directions of the at least two laser direct writing beams, which is a lateral direction, a direction parallel or antiparallel of the beam directions of the at least two laser direct writing beams, which is a vertical direction, or both.

The at least two laser direct writing beams may comprise at least three laser direct writing beams, preferably at least four laser direct writing beams, more preferably at least eight laser direct writing beams, and most preferably at least sixteen laser direct writing beams.

The at least three laser direct writing beams may be arranged in one dimension. The at least three laser direct writing beams may be arranged in two dimensions. Writing or inscribing waveguides which are close together may require a two-dimensional (2D) arrangement of the two or more laser direct writing beams due to spatial constraints of the component forming the two or more beams. Further, by arranging the various laser direct writing beams in a 2D configuration, the interaction of the various focus spots can be restricted, for example their thermal coupling.

The at least two laser direct writing beams may cause a refractive index change in the sample of at least 0.5%, preferably of at least 1.0%, more preferably of at least 2.0%, and most preferably at least 3.0%.

The at least one optical waveguide may have a larger refractive index change at a bent section than in a straight section.

Individually controlling each one the at least two laser direct writing beams may comprise at least one of: individually setting an optical intensity of each one the at least two laser direct writing beams, individually setting a phase of each one of the at least two laser direct writing beams, individually setting a focus depth of each one of the at least two laser direct writing beams, individually setting a polarization of each one of the at least two laser writing beams, or individually setting a lateral distance between the at least two laser direct writing beams.

This feature significantly increases the flexibility of a manufacturing process, and thus reduces the production time for a complex photonic element.

The at least one photonic element and/or the at least one waveguide may comprise at least one sequence of adjacent bubbles either arranged in at least one of: a straight line, a curved line or both.

The at least one sequence or row of adjacent bubbles may act as a cladding layer guiding light by internal total reflection.

By focussing several short or ultra-short pulses of a laser direct writing beam at essentially a same position of the focus spot, material of the sample can locally be evaporated which results in a small void or bubble at the focus spot. Controlling the locally deposited energy enables adjusting a size of the micro- or nano-voids or bubbles. An optical waveguide produced by a sequence of adjacent bubbles or voids typically has a refractive index change which is significantly larger than the one caused by a local change of the material composition and/or a material density change. Hence, an optical waveguide in form of micro- or nano-voids or bubbles significantly improves the light guiding capabilities compared to conventional waveguides fabricated by inscribing laser direct writing beams into an optically transparent sample. The usage of bubbles enables shrinkage of waveguiding structures generated by laser direct writing beams. Thus, in addition to parallelizing the inscription of laser direct writing beams, the presented kind of generating waveguides may significantly improve the light guiding capabilities of optical waveguides.

In a sample having depth appropriate for guiding light by internal total reflection an optical waveguide can be generated by inscribing adjacent bubbles in a row or sequence in a distance of some micrometers either from the left or the right edge of the sample. The sequence of adjacent bubbles act or function as a cladding layer for the optical waveguide. A waveguide can be generated at any desired position within the thin sample by writing two sequences of adjacent bubbles in parallel rows acting as left and right cladding layers.

The at least one optical waveguide may comprise at least three sequences of adjacent bubbles acting as cladding layers which limit the at least one optical waveguide at three sides.

If it is necessary to restrict the optical waveguide at three sides three sequences or rows of adjacent bubbles can be inscribed in a sample, for example for limiting the optical waveguide at a left, right, and a bottom side.

The at least one sequence or row of adjacent bubbles may be written by focussing one laser direct writing beam into a sample. This means a single optical waveguide may be written or inscribed by using one laser beam providing a sequence of short laser pulses. Further, a single waveguide may be generated by writing a first portion of the waveguide using a conventional direct writing technique and a second portion be written by generating at least one sequence or row of adjacent bubbles. Both portions may be inscribed in a sample using a single laser beam source by just adapting one or more parameters of the laser beam. Preferably, the second portion generates a bent optical waveguide. It is of course also possible to parallelize the bubble generation process by simultaneously using two or more focussed laser direct writing beams in parallel.

The at least one photonic element and/or optical waveguide may comprise at least four sequences of adjacent bubbles acting as cladding layers to limit the at least one optical waveguide at a left, right, bottom, and top side.

Inscribing four sequences of adjacent bubbles which may act as four cladding layers and which may limit the optical waveguide at a left, right, bottom, and top side allows generating an optical waveguide at any desired position and in any predetermined form in a bulk sample.

A distance between adjacent bubbles may, in some examples, essentially correspond to their extensions in lateral directions.

In some examples, the bubbles may have a lateral size of 0.3 µm to 10.0 µm, preferably 0.4 µm to 7.0 µm, more preferably 0.5 µm to 5.0 µm, and most preferably 0.6 µm to 3.0 µm. Further, the bubbles may have a size in the vertical or the beam direction of 0.3 µm to 10.0 µm, preferably 0.4 µm to 7.0 µm, more preferably 0.5 µm to 5.0 µm, and most preferably 0.6 µm to 3.0 µm.

This means, the dimensions of the bubbles can be designed so that the resulting waveguides acts as a single mode waveguide for optical radiation in the visible, ultraviolet (UV) and/or infrared (IR) wavelength range.

Controlling a bubble size may comprise at least one of: controlling a pulse energy of the pulses of the at least two laser direct writing beams, controlling a number of pulses focused onto one position, or controlling a numerical aperture (NA) of a focussing objective.

Generating the photonic element may further comprise monitoring a size of the bubbles during their generation by controlling a spark portion of an optical radiation signal detected during bubble generation.

A spark portion of the optical radiation signal originating from the focus spot of at least one of the at least two laser direct writing beams comprises a quickly rising intensity portion when locally heating a sample at the focus spot by successively irradiating a number of pulses into the respective focus spot. A decrease of the spark intensity may indicate a local surface deformation or a local bulk deformation of the sample at the position of the focus spot. Moreover, a reduction of the spark intensity may indicate a defocussed laser direct writing beam. This means, the signal height of the spark portion may be used for detecting a local surface or bulk deformation in real-time. Hence, the spark portion of the detected optical signal originating from at least one of the at least two focus spots can be used in a closed feedback loop for controlling the generation of the photonic element during focussing the at least two laser direct writing beams at the focus spots.

Generating a bubble may comprise sequentially focusing a number of N essentially locally overlapping pulses of the at least two laser direct writing beams in the sample, wherein N is in a range: 2 < N < 1000, preferably: 2 < N < 200, more preferred: 2 < N < 50, and most preferred: 2 < N < 10.

The at least two laser direct writing beams may have an energy density at a focal spot of: 0.01 J/cm² to 100 J/cm², preferably 0.02 J/cm² to 50 J/ cm², more preferred 0.05 J/cm² to 20 J/cm², and most preferred 0.1 J/cm² to 10 J/cm².

A pulse of the at least two laser direct writing beams may comprise a burst or a sub-sequence comprising of 2 to 50, preferably 2 to 20, more preferably 2 to 10, and most preferably 3 to 5 sub-pulses. Further, a pulse of a burst or a sub-pulse may comprise 2 to 50, preferably 2 to 20, more preferably 2 to 10, and most preferably 3 to 5 pulses.

Controlling the number of pulses in a bi-burst mode may comprise simultaneously controlling a pulse envelope.

The pulses of the at least two laser direct writing beams may have a pulse width < 1000 ps, preferably < 100 ps, more preferred < 1 ps, and most preferred < 0.2 ps.

Pulses of the at least two laser direct writing beams may have a pulse repetition rate > 0.1 MHz, preferably > 1 MHz, more preferred > 10 MHz, and most preferred > 100 MHz.

Repetition rates up to about 1 MHz are typically preferred for writing or inscribing conventional waveguides. Repetition rates exceeding about 1 MHz usually may lead to heat accumulation in typical material compositions of substrates used for fabricating optical waveguides. If not stopped timely, the process of local heat accumulation may result in forming a micro-void or a bubble.

The at least two laser direct writing beams have a wavelength within a range of 150 nm to 1500 nm.

The sample comprises a material composition having a bandgap which is larger than an operating energy range of the photonic element. The sample may comprise any dielectric and/or semiconducting material which is at least partially optically transparent at the wavelength of the at least two laser direct writing beams. The sample may comprise glasses such as silicates, borosilicates, doped silicates, phosphate glasses, rare earth doped glasses, or doped chalcogenides. The sample may further comprise crystalline materials, as for example lithium niobate or yttrium aluminium garnet.

The bubbles may cause a local refractive index change of > 1%, preferably > 3%, more preferably > 7%, and most preferably > 20%

The bubbles may cause a local change of the sample surface at the positions of the bubbles when generated in a depth of less than 20 µm.

Generating the at least one photonic element may further comprise detecting the change of the at least one property of the sample.

Analyzing the photonic element during and/or at the end of its manufacturing process, the manufacturing process of photonic elements can be improved by correcting distortions of the laser beam writing process in real-time.

Detecting the change of at least one property of the sample may comprise detecting optical radiation originating from at least one of the at least two positions during focussing the at least two laser direct writing beams into the sample.

Detecting optical radiation originating from the focus spot of at least one of the at least two laser direct writing beams allows an in situ or a real-time monitoring of the generation of the photonic element. By detecting optical radiation emitted by a sample during generating a photonic element enables a correction or an adaptation of the manufacturing process in real time. This results in a high yield of the photonic element fabrication process.

Detecting optical radiation of the sample may comprise selecting a specific portion of the emitted optical radiation for determining details of the generation process. Detecting the optical radiation may comprise using a photodetector and a wavelength filter.

Detecting the change of the at least one property of the sample may comprise measuring the change of the at least one property using at least one of a scanning probe microscope of a scanning particle microscope.

Detecting the change of the at least one property may comprise determining at least one of: a mode field diameter (MFD) of the at least one optical waveguide of the generated photonic element, a propagation loss of the at least one optical waveguide of the generated photonic element, a bent loss of the at least one optical waveguide of the generated photonic element, or a coupling loss of the at least one optical waveguide of the at least one photonic element.

Detecting the change of the at least one property may further comprise comparing the change of the at least one property with a determining variation range.

Generating the photonic element may further comprise classifying the photonic element as fulfilling a predetermined specification, not fulfilling the predetermined specification but reparable, or not fulfilling the predetermined specification and not reparable. Photonic elements of the last group are scrap.

Reparable photonic elements may be repaired by focusing at least one of the at least two laser direct writing beams onto a defective position of the respective photonic element.

Generating the photonic element may further comprise performing a post generation treatment step. The post generation treatment step may stabilize the generated photonic element for securing its long-term stability. The post generation treatment step may comprise at least one of: a thermal treatment, or a protective gas treatment.

Generating the photonic element may further comprise designing the photonic element and/or the sample to be operable as a substrate in a co-packaged optics.

Co-packaged optics offers advantages over conventional or traditional approaches to optical communication. By integrating the optical components within the same package as the electronic counterparts the usage of bulky external optical modules can be avoided. This concept reduces the necessity of long-distance electrical connections. Hence, CPO can reduce power consumption and latency, and resulting in more energy-efficient data transfer. Further, the reduction of electrical interconnects and signal conversions, CPO can reduce signal degradation and interference.

A computer program may have instructions causing a computer system to perform any of the method steps any one of the aspects described herein.

A photonic element may be generated according to a method of any one of the aspects described herein. A photonic element may comprise a photonic integrated circuit.

A co-packaged optics module may have a substrate generated according to a method of any one of the aspects described herein.

In an embodiment, an apparatus for generating a photonic element by simultaneously using at least two laser direct writing beams comprises: (a) means for providing at least two laser direct writing beams; (b) at least one beam modulator array operable to individually control each one of the at least two laser direct writing beams; (c) at least one displacement unit operable to move the at least two laser direct writing beams relative to the sample; and (d) at least one control unit having instructions enabling the at least one control unit to automatically generate the photonic element. For example, least one control unit may comprise instructions which, when executed, control the apparatus to automatically generate the photonic element.

The at least two laser direct writing beams may be adapted to simultaneously change at least one property of a sample at at least two positions. In some examples, the apparatus may comprise means for simultaneously focussing the at least two laser direct writing beams into the sample at the at least two positions for locally changing at least one property of the sample at the at least two positions.

It is noted that, in some examples, the means (a) for providing at least two laser direct writing beams may not be provided. Instead, for example, means for providing at least one laser direct writing beam may be provided. The apparatus may then comprise at least one beam modulator array operable to individually control the at least one laser direct writing beam and at least one displacement unit may be operable to move the at least one laser direct writing beam relative to the sample, as well as at least one control unit having instructions enabling the at least one control unit to automatically generate the photonic element. Also on this case, the various further features described herein may be used in combination with the various apparatuses as described herein.

In some examples, the means for providing may comprise: at least one laser beam source operable to generate at least one laser direct writing beam; at least one beam splitter operable to split the at least one laser direct writing beam of the at least one laser beam source into at least two laser direct writing beams. In another example, the means for providing may comprise: at least two laser beam sources, each operable to generate at least one laser direct writing beam. Particularly in these examples, the at least one beam splitter may be optional. In some of these examples, however, at least two beam splitters may be provided to split the at least two laser direct writing beams into at least four direct laser writing beams. It is also possible to use one beam splitter for splitting a laser direct writing beam in a predetermined number of laser direct writing beams.

The apparatus may further comprise at least one metrology unit operable to detect the change of the at least one property of the sample.

The at least one metrology unit may comprise an in-line metrology unit. This means the at least one metrology unit may be implemented in an apparatus as described herein for performing reliable and non-destructive measurements of generated photonic elements in an automated manner. An in-line metrology unit can be fully integrated into a production line of photonic elements and may be used for a comprehensive process control of the production line.

The at least one metrology unit may be further operable to detect optical radiation emitted from the sample when the at least two direct writing beams are focused into the sample.

The at least one control unit may be further operable to control at least one of: the at least one laser beam source, the at least one beam splitter, the at least one beam modulator array, the at least one displacement unit, or the at least one metrology unit.

The apparatus may further comprise at least one of: at least one shutter operable to block the at least one laser direct writing beam, at least one objective operable to focus the at least two laser direct writing beams into the sample, at least one beam expanding unit operable to laterally expand the at least one laser direct writing beam, a microlens array operable to image the at least two laser direct writing beams, at least one dichroic mirror operable to direct the at least two laser direct writing beams to the at least one objective and direct optical radiation emitted from the sample towards at least one first photodetector, at least one second photodetector operable to detect the at least one laser direct writing beam, or at least one wavelength filter operable to select a wavelength range of the optical radiation originating from the sample for detection by the at least one first photodetector

The at least one objective may have a numerical aperture (NA) in a range of 0.3 to 1.4, preferably 0.4 to 1.2, more preferably 0.5 to 1.0, and most preferred 0.6 to 0.9.

The at least one beam modulator array may comprise an array of individually controllable elements operable to set at least one of: an optical intensity of the at least two laser direct writing beams, a polarization of the at least two laser direct writing beams, a focus depth of the at least two laser direct writing beams, or a phase of the at least two laser direct writing beams.

The apparatus may further comprise a closed feedback loop for controlling generating the at least one photonic element. The closed feedback loop may use the at least one first photodetector as detecting an actual state of the closed feedback loop.

It is noted that the various features described herein with reference to a method, computer program and an apparatus may each be used for the various methods, computer programs and apparatuses as described herein, even though this may not be expressly specified in each instance.

Whether described as method steps, computer program and/or means, the functions described herein may be implemented in hardware, computer programs, software, firmware, and/or combinations thereof. If implemented in software/firmware, the functions may be stored on or transmitted as one or more instructions or code on a computer-readable medium. Computer-readable media includes both computer storage media and communication media including any medium that facilitates transfer of a computer program from one place to another. A storage medium may be any available media that can be accessed by a general purpose or special purpose computer. By way of example, and not limitation, such computer-readable storage media can comprise RAM, ROM, EEPROM, FPGA, CD/DVD or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor.

Generally, a control unit as described herein may be include a general-purpose or special-purpose computer and/or a general-purpose or special-purpose processor.

### 4. Description of the drawings

In order to better understand the present invention and to appreciate its practical applications, the following Figures are provided and referenced hereafter. It should be noted that the Figures are given as examples only and in no way limit the scope of the invention.
- Fig. 1: schematically presents a block diagram of an apparatus for inscribing structures into a sample using one laser direct writing beam or a plurality of laser direct writing beams;
- Fig. 2: schematically shows focusing a light pulse into a sample in the left upper partial image, illustrates a local spread of the heat in the sample in the right upper partial image, and depicts a time diagram of the heat accumulation in the sample of eight ultra-short light pulses sequentially focussed into essentially the same position in the lower partial image;
- Fig. 3: presents results of surface modifications of a sample when locally depositing laser pulses having a first energy at various focus depths;
- Fig. 4: shows, in addition to Fig. 3, the optical radiation emitted from the sample during irradiation with laser pulses with the first pulse energy in various focus depths;
- Fig. 5: repeats Fig. 4 when irradiating the sample with a second laser pulse intensity which is higher than the first laser pulse intensity of Figures 3 and 4;
- Fig. 6: repeats Fig. 3 for the second laser pulse intensity level of Fig. 5;
- Fig. 7: shows the optical radiation emitted from the sample as a function of the radiation time when writing laser pulses having a pulse energy of 25 nJ into various focus depths;
- Fig. 8: depicts a section of a sample surface into which vertical sequences or rows of adjacent micro-voids or bubbles are generated by writing a long sequence of short laser pulses each having a pulse energy of 120 nJ;
- Fig. 9: schematically presents an overview of the temporal development of different aspects of bubble or micro-void formation in a sample by irradiation with a sequence of short laser pulses;
- Fig. 10: schematically shows an exemplary laser irradiation intensity over time, wherein the laser irradiation comprises a sequence comprising a sub-sequence of sub-pulses;
- Fig. 11: schematically shows five exemplary ways of controlling a sequence envelope;
- Fig. 12: schematically depicts a block diagram of an apparatus which is designed to simultaneously focus a plurality of laser direct writing beams at different positions in a sample, move the plurality of laser direct writing beams relative to the sample, and individually controlling each of the at least two laser direct writing beams;
- Fig. 13: schematically shows a block diagram of an apparatus combining an apparatus for generating a photonic element by modifying or changing at least one property of a sample of Fig. 12 and at least one metrology unit for determining the at least one local change of the at property of the sample and/or the performance of the generated photonic element; and
- Fig. 14: presents a flow chart of a method for generating a photonic element.

### 5. Detailed description of preferred embodiments

In the following, the present invention will be more fully described hereinafter with reference to the accompanying figures, in which exemplary embodiments of the invention are illustrated. However, the present invention may be embodied in different forms and should not be construed as limited to the embodiments set forth herein. Rather, these embodiments are provided so that this disclosure will be thorough and will convey the scope of the invention to persons skilled in the art.

In particular, the inventive method is described in the context of photonic elements typically used as co-package optics (CPO) in optical communication systems. However, a person skilled in the art will acknowledge that photonic elements may be used in any system for optically transmitting large amounts of data over short (< 10 cm) and/or medium distances (< 100 cm). Photonic elements described in this application can be designed as substrates optically distributing data within an integrated circuit, for example within a switch ASIC (application specific integrated circuit) or between several integrated circuits of the same type, such as two or more DSPs (digital signal processors) or integrated circuits of different types, for example a DSP and one or more power electronic components. Further, photonic elements are not limited to data transmission by guiding data optically through a multiplicity of optical waveguides. Rather, photonic elements may also comprise structures for selecting, rearranging, and redistributing optical signals. This means they may realize functions of photonic integrated circuits. **[Correct?]**

In the following, for generating photonic elements, energy is locally provided in or on samples in the form of photon pulses. However, the inventive method is not restricted to this specific kind of energy provision. Rather, other kind of particles, as for example electrons, can be applied for focusing energy pulses on a sample in order to produce local modifications in or on the sample for forming a photonic element.

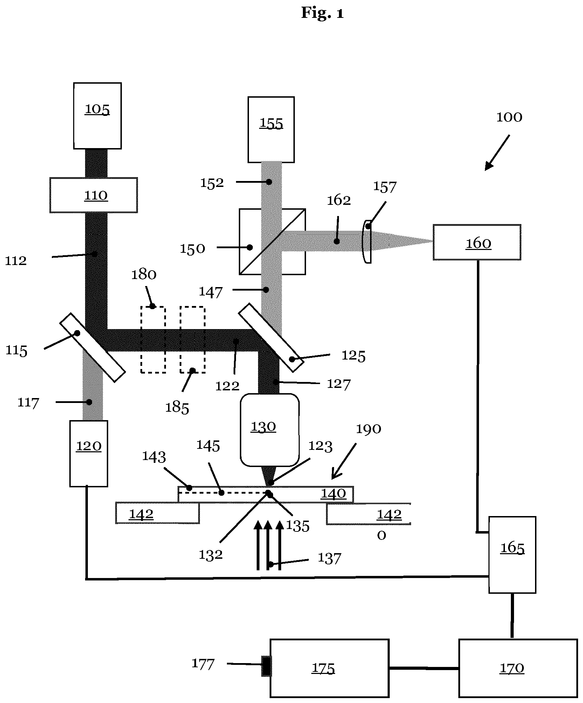

Fig. 1 depicts a schematic block diagram of an apparatus 100 which can be used for generating and writing one or more modifications 145 into a sample 140. The modifications 145 can be created in a specific geometric structure such as forming an optical waveguide 145, a microlens, a coupling element, a wavelength selective element or a fiber alignment structure. The apparatus 100 comprises a sample holder 142 which may be movable in two (for example in the lateral directions) or three dimensions such as in two lateral and the vertical direction) (not indicated in Fig. 1). The sample 140 may be fixed to the sample holder 142 by using various techniques, as for example, clamping or electrostatic chucking (not indicated in Fig. 1). The sample 140 may be any dielectric or semiconducting component, preferably fulfilling the requirements that the bandgap of the sample material is larger than the photon energy of the laser light source 105 used for generating the modifications 145. Further, the energy of photons used during operation of the photonic element 190 generated in the sample 140 is preferably lower than the bandgap of the sample material from which the photonic element is fabricated.

The apparatus 100 includes a laser beam source 105 which can produce a beam or a photon beam 112 of short or ultra-short pulses, light pulses, or photon pulses. The laser beam source 105 may generate light pulses or photon pulses of variable duration. The pulse duration may be as low as 10 fs (femtosecond) but may also be increased up to 1000 ps (picosecond). The pulse energy density of the photon pulses at the focal point can also be adjusted across a huge range reaching from 0.001 J/cm² per pulse up to 100 J/cm² per pulse. Further, the repetition rate of the photon pulses comprises the range from 1 Hz (Hertz) to 1 GHz. In a preferred embodiment, the photon pulses may be generated by a Ti:Sapphire laser operating at a wavelength of 800 nm. However, the methods described in the following are not limited to this laser type, principally each laser type producing photons in a wavelength range from 150 nm (nanometer) to 1500 nm and which is able to generate pulses with durations in the femtosecond range may be used. Hence, for example, Nd-YAG laser systems or dye laser systems may also be applied for generating direct writing laser pulses generating local modifications 145 in a sample 140.

A mechanical shutter 110 may block the pulse stream or photon pulse stream 112 generated by the laser beam source 105. The mechanical shutter 110 has an opening time of about 1 ms (millisecond) and a gate time of about 42 ms.

The partially transmitting steering mirror 115 directs the major portion of the pulsed laser beam 112 as a pulsed laser beam 122 onto the dichroic mirror 125. A small portion 117, for example 1% of the optical intensity of the pulsed laser beam 112, passes the partially transmitting steering mirror 115 and incidents on a second photodetector 120 for determining the optical intensity of the pulsed laser beam 122.

The dichroic mirror 125 directs the laser pulses 122 or the laser pulse train 122 into the focusing objective 130. The objective 130 focuses the pulsed laser beam 123 into the sample 140. The NA (numerical aperture) of the applied objective 130 depends on a predetermined spot size 132 at the focal point 135 and the position of the focal point 135 with respect to the sample surface 142. The NA of the objective 130 may be up to 0.9 which results in a focal point spot diameter 132 of essentially 1 µm.

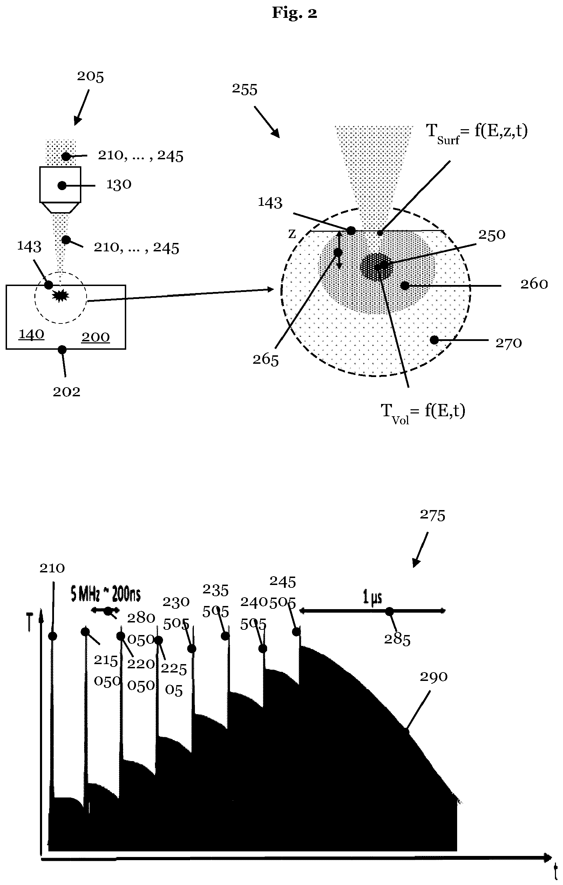

The optical intensity of the laser beam 127 can be set to cause local optical breakdown at the focal point 135 in the sample 140. Details of this process are explained in the context of the following Fig. 2. The huge optical intensity in the focal point 135 leads to the emission of optical radiation by the sample 140. A portion of the emitted radiation enters the objective 130 and then passes the dichroic mirror 125. The beam splitting cube 150 deflects the radiation 147 originating from the sample 142 as optical radiation 162 towards the lens 157 which focusses it into the first photodetector 160. This means, the radiation 162 emitted by the sample 140 when focussing laser direct writing pulses into the sample 140 can be used for monitoring and thus for controlling the change of at least one property of the sample 140 caused by one of several ultra-short laser pulses locally depositing high amounts of energy at the focal point 135.

In the exemplary apparatus of Fig. 1, the first 160 and the second photodetector 120 have a response time of approximately 80 µs (microsecond). For example, pin- or Avalanche-type photodiodes or photomultipliers may be used as first 160 and second photodetectors 120. Their signals can be viewed or monitored using the oscilloscope 165.

As described above, the apparatus 100 generates a pulse train 127 or a sequence of pulses focussed on the focal point 135. For parallelizing the inscription of direct writing laser beam pulses, a beam splitting unit 180 or a beam splitter 180 may be inserted in the apparatus 100. The beam splitter unit 180 may be of any type such as a diffractive beam splitter, birefringence beam splitter, or the like. The beam splitting unit 180 may split or separate the beam 112 or primary beam 112 into a predetermined plurality of secondary laser direct writing beams. Reference signs 122 and 123 symbolize a single laser direct writing beam 122 or a focussed laser beam 123 when the components 180 and 185 are not implemented in the apparatus 100 and illustrate the plurality of secondary laser direct writing beams 122 or the focussed laser direct writing beams 123 in case the components 180 and 185 are inserted and operated in the apparatus 100. The plurality of secondary laser direct writing beams 122, 123 may be arranged in a one-dimensional (1D) or a two-dimensional (2D) array. The plurality of secondary laser direct writing beams 122 may comprise at least two and up to 64 secondary laser direct writing beams.

To enhance the flexibility of the writing process for modifying at least one property of the sample 140 when simultaneously using a plurality of (secondary) laser direct writing beams 122, 123, a light modulator unit 185 or a light modulator array 185 may be installed in the apparatus 100. The light modulator unit 185 may comprise an array of individually controllable elements that are each adapted to be set to individually modify at least one parameter of the plurality of the laser direct writing beams 122, 123. The parameter may comprise an optical intensity, a polarization, a phase, a focus position or focus depth, and a distance to the neighbouring laser direct writing beam 122.

The light modulator array 185 may comprise a plurality of separately or individually controllable cells through which the plurality of laser direct writing beams 122 passes. Each cell of the light modulator unit 185 may rotate the polarization plane of each one of the plurality of laser direct writing beams 122 by a predetermined angle. A polarization filter at the exit of the light modulator array 185 can attenuate, block of pass the light irradiated on it. Further, each cell of the light modulator unit 185 may have a microlens. Different microlenses may have different focal lengths. Moreover, by blocking an adjacent laser direct writing beam 122, the distance between neighbouring laser direct writing beams 122 can be set. This also allows adjusting a thermal coupling between focal points 135 of neighbouring pulses 123 in the sample 140.

The apparatus 100 also includes a controlling unit 170 and a computer 175 which manage the translations of the two-axis or three-axis positioning stage of the sample holder 142 in the plane of the sample 140 (the lateral directions) and or the vertical direction (the laser beam direction 127). The controlling unit 170 and the computer 175 may also control the translation of the objective 130 perpendicular to the plane of the sample holder 142 via a one-axis positioning stage to which the objective 130 may be fixed. It is also conceivable to equip both the objective 130 and the sample holder 142 with three-axis positioning systems.

The computer 175 may be a microprocessor, a general-purpose processor, a special purpose processor, a CPU (central processing unit), a GPU (graphic processing unit) or the like. It may be arranged in the controller 170, or may be a separate unit such as a PC (personal computer), a workstation, etc. It is also possible to implement the controller 170 into the computer system 175. The computer 175 may further comprise I/O (input/output) units like a keyboard, a touch-pad, a mouse, a video/graphic display, a printer, etc. In addition, the computer 175 may also comprise a volatile and/or a non-volatile memory (not shown in Fig. 1). The computer 175 may be realized in hardware, software, firmware or any combination thereof. Moreover, the computer 175 may control the laser source 105 (not indicated in Fig. 1). Further, the computer system 175 may comprise an interface 177. The computer 175 may exchange data with another apparatus or with a computer system of another apparatus via the interface 177.

The computer 175 may comprise algorithms and/or a computer program having instructions which cause the various components of the apparatus 100 to use two or more laser direct writing beams 122, 123 for processing the sample 140 for generating the photonic element 190. The algorithms and/or the computer program may be designed to operate the apparatus 100 autonomously, i.e., essentially without human intervention.

Moreover, the apparatus 100 may also provide a viewing system including a CCD (charge-coupled device) camera 155 which receives light from an illumination source 137 arranged to the sample holder 142 below the sample 140 via the objective 130, the dichroic mirror 135 and the beam splitter cube 150. The viewing system facilitates navigation of the sample 140 to the target position at which the one or the plurality of laser direct writing beams 122, 123 change at least one property of the sample 140. Further, the viewing system may also be used to observe the formation of the change of the at least one property of the sample 140 generated by the laser direct writing pulses 122.

Fig. 2 schematically illustrates the formation of a local change of a property of the sample 140 which is optically transmissive or transparent. The upper left partial image 205 presents focusing of laser direct writing pulses 210 to 245 in form of ultra-short photon pulses 210 to 245 through the objective 130 of the apparatus 100 of Fig. 1 into a sample 140 which is a glass silica substrate 200 in the example of Fig. 2. In Fig. 2, the objective 130 has an NA of 0.9. Further, in the example depicted in Fig. 2, the pulses 210 to 245 incident through the front side surface 143 of the sample 140. It is also possible that the light pulses 210 to 245 incident through the rear side surface 202 and are focussed on a distance 265 below the front side surface 143 (not indicated in Fig. 2). The distance 265 may vary from about 0.3 µm to the sample depth minus 0.3 µm.

The upper right partial image 255 of Fig. 2 shows that the light pulses 210 to 245 are focussed on a distance z 265 below the front side surface 143. If the optical intensity at the focal point 135 surpasses the threshold of optical breakdown of the sample 140, nonlinear absorption processes start at the focal point 135. As a consequence, the light pulses locally deposit huge amounts of energy at the focal point 135. As a result of the energy deposited in the volume 250 of the sample 140 by the first pulse 210 and the two or more following light pulses 215, 220, 225, 230, 235, 240, 245 at the same position, the temperature raises within the volume 250 of the sample 140 if the cooling time of the sample material of the radiated volume 250 is larger than a time interval between the two or more sequential light pulses 210, 215, 220, 225, 230, 235, 240, 245. The energy deposited in the volume 250 by the energy pulses 210 to 245 spreads across the volume 260 and 270 as a function of time caused by heat conduction. This is expressed in the diagram 255 of Fig. 2 by the equation T_{Vol}=f(E,t). If the extending volume 260, 270 reaches the surface 143 of the sample 140, a temperature gradient establishes across the surface 143 which can be expressed by T_{Surf}=f(E,z,t). This means that the temperature of the surface 143 of the sample 140 depends on depth 265 into which the light pulses 210 to 245 are focused.

Heat accumulation induced by a sequence of eight ultra-short laser pulses 210, 215, 220, 225, 230, 235, 240, 245 is demonstrated in the lower partial image 275 of Fig. 2. Energy is predominantly deposited in the focus point 135 or focus spot of the ultra-short laser pulses 210-245. The locally deposited energy is almost instantly converted into heat. As a consequence of heat conduction, the heat accumulated in the focus of the ultra-short laser pulses rapidly spreads across the volumes 250, 260 and 270, and when reaching the surface 143, also across the surface 143 of the sample 140. The heat spreading is governed by the heat transfer coefficient which is typically a material-specific constant. The heat conduction typically leads to an exponential decay of the temperature at the position the light or energy pulses 210-245 locally deposit energy. The cooling time may be defined as the time period the temperature difference between the maximum temperature at the focal point 135 of the laser pulses 210 to 245 and a portion of the sample 140 having an ambient temperature is halved.

The local temperature rises in the material of the sample 140 at the focal position, if the time period between two consecutive light pulses 210 to 245 is smaller than the cooling time of the sample material the two or more energy pulses 210 to 245 are incident on. The method of heat accumulation also works, if the time period between two consecutive energy pulses 210 to 245 is two-times or three-times the cooling time, but its efficiency decreases.

In the example of Fig. 2, the first light pulse 210 and the second energy pulses 215, 220, 225, 230, 235, 240, 245 have a pulse width of 200 fs and a repetition rate of 5 MHz, i.e., the time period between two sequential laser pulses 210, 215, 220, 225, 230, 235, 240, 245 is 200 ns as denoted by the double-headed arrow 280 in Fig. 2. As is indicated by the black area 290 in the partial image 275, the temperature almost rises linearly in the volume 250 based on the energy provision by the consecutive light pulses 210 to 245. The energy density needed for the formation of a local change of the property 145 of the sample 140 depends on the pulse repetition rate and the energy density of the light pulses 210 to 245. For the example presented in Fig. 2, i.e., for a pulse repetition rate of 5 MHz, the energy density of the energy pulses 210 to 245 is within a range of 0.1 J/cm² and 1 J/cm². Within a time interval of 1 µs, the temperature essentially reduces in the volume 250 or at the surface 143 to almost the original numerical value. This is indicated in the diagram 275 by the double-headed arrow 285. The time interval indicated by the double-headed arrow 285 corresponds to about three-times the cooling time.

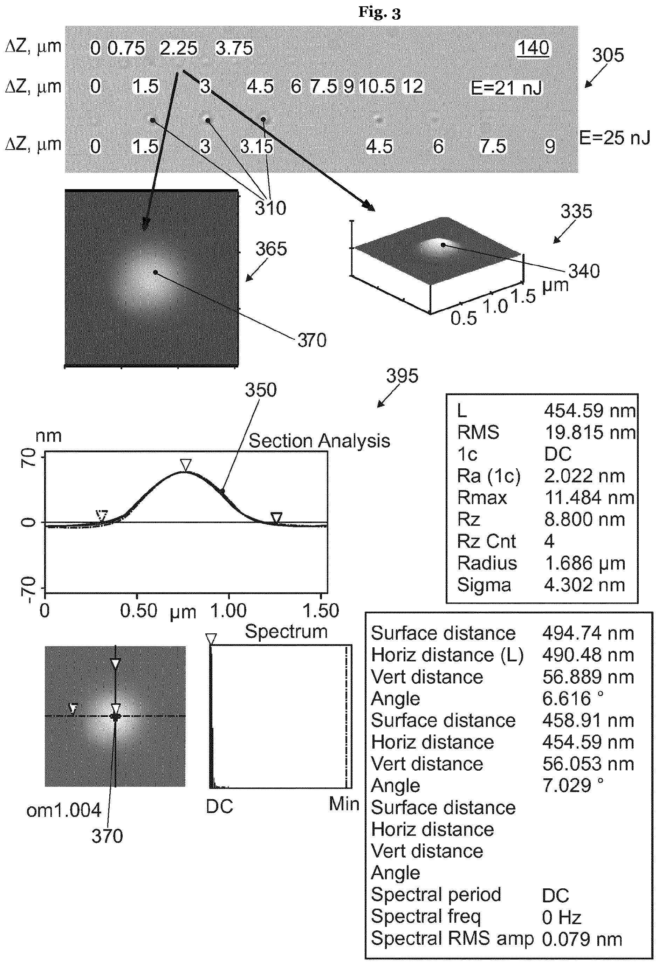

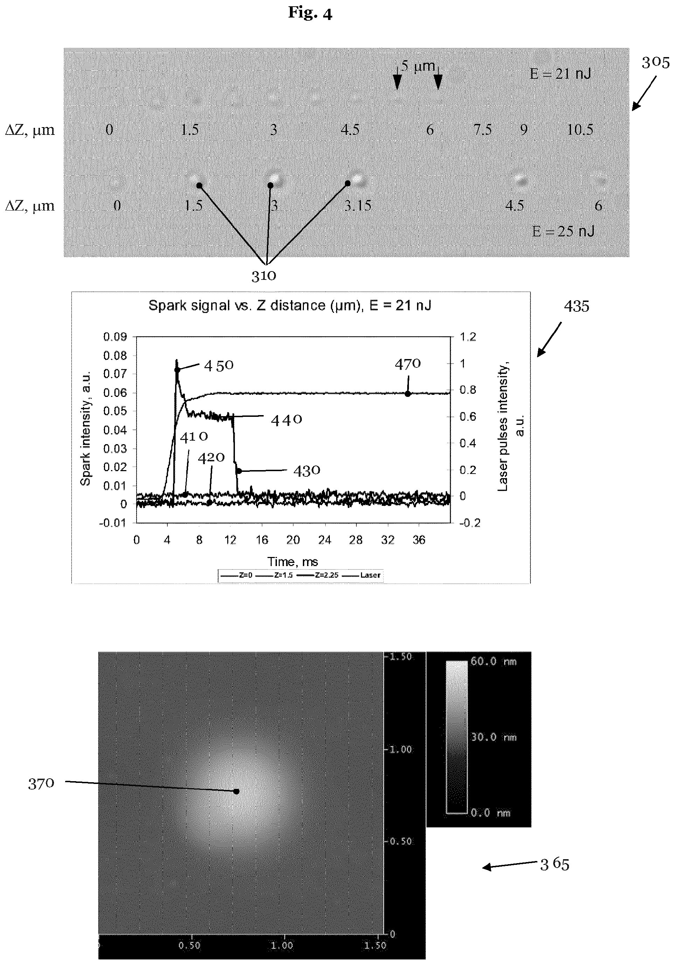

In the upper partial image 305, Fig. 3 presents changes 310 of the surface 143 of a sample 140 caused by inscribing a series of laser direct writing pules 210-245 into various depths of the sample 140. The upper partial image 305 of Fig. 3 and the following Figures 4 to 6 are phase contrast images of light transmitting the sample 140. The upper two rows indicate the various focus depths 265 of light pulses having an energy of 21 nJ, and the third row represents numbers of various focus depths 265 of writing a sequence of light pulses each having an energy of 25 nJ. For laser pulses having a deposited energy of 25 nJ, the induced surface modifications are clearly visible. The upper partial image 305 clearly reveals that the induced surface modification depends on the amount of energy sequentially deposited in the sample 140. Further, as an example, the partial image 335 of Fig. 3 shows the surface modification generated at the sample surface 143 when depositing light pulses 210-245 each having an energy of 21 nJ at a focus depth 265 of 2.25 µm. The partial image 365 presents a magnified representation of the partial image 335. The partial images 335, 365 are obtained by scanning a probe of an AFM (atomic force microscope) across the locally modified sample surface 143.

The lower partial image 395 presents the analysis of the partial image 335. When depositing a total energy of 21 nJ at a focus depth 265 of 2.25 µm, the induced surface modification leads to a bump having a height of 56 nm and a width (FWHM, full width half maximum) of 450 nm.

Fig. 4 reproduces in the upper partial image 305 the upper partial image 305 of Fig. 3. Further, the lower partial image 365 repeats the partial image 365 of Fig. 3. The middle partial image 435 of Fig. 4 shows the optical signal emitted by the sample 140 and detected by the first photodetector 160 of Fig. 1 when a sequence of laser pulses 210-245 of 21 nJ locally deposit energy in various depths 265 of the focal point 135. Curve 440 which refers to the right ordinate shows the laser pulse intensity as a function of time and is measured by the second photodetector 120.

Curve 410 depicts the detected optical radiation signal as a function of time when focussing the laser beam 123 onto the surface 143 of the sample 140, i.e., z = 0 µm. The first photodetector 160 detects a very low constant signal. Curve 420 shows the detected optical radiation signal of the first photodetector 160 when the laser beam 122 deposits a sequence of energy pulses of 21 nJ in a focus depth 265 of 1.5 µm. The first photodetector 160 essentially does not detect optical radiation emitted from the sample 140.

On the other hand, curve 430 presents the signal detected by the first photodetector 160 as a function of time when the laser beam 122 is focussed on a depth of 3.0 µm. Curve 430 shows a steep rise of the optical signal 450 detected by the photodetector 160 followed by a signal decline to a plateau 460 and a signal drop to essentially zero after a time period of about 8ms.

The steep rising signal portion is in the following called spark 450 and further details are discussed in the context of following Figures. A spark 450 appears as a consequence of an increase of the optical absorption at high temperatures.

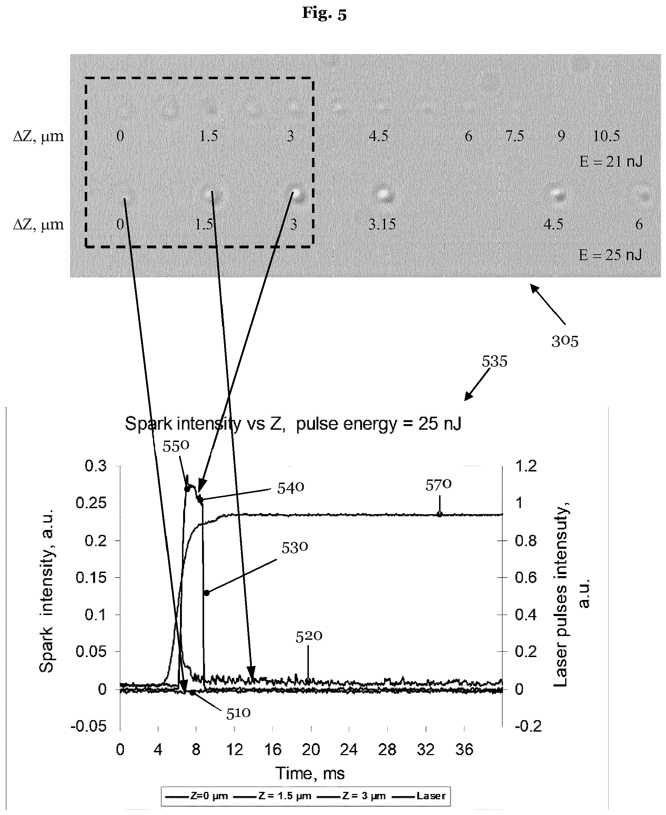

The upper partial image 305 of Fig. 5 repeats again the upper partial image 305 of Figures 3 and 4. The lower partial image 535 reproduces the lower partial image 435 of Fig. 4, but for a pulse energy of 25 nJ instead of 21 nJ in Fig. 4. As can be seen from curve 510, the photodetector 160 does not detect optical radiation emitted from the sample 140 when focussing the laser pulses 210-245 onto the sample surface 143 (z = 0 µm). At a focusing depth of 1.5 µm, curve 520 shows a small sharp peak or spark 525. When focussing a total energy of 25 nJ is a depth of 3.0 µm, a large spark 550 having a width of approximately 2 ms occurs.

When comparing Figures 4 and 5, it can be seen that the spark intensity raises fast as a function of the locally deposited energy. A decreasing spark intensity 550 is typically connected to a local surface deformation of the sample 140 which results in a defocusing of the laser beam 123.

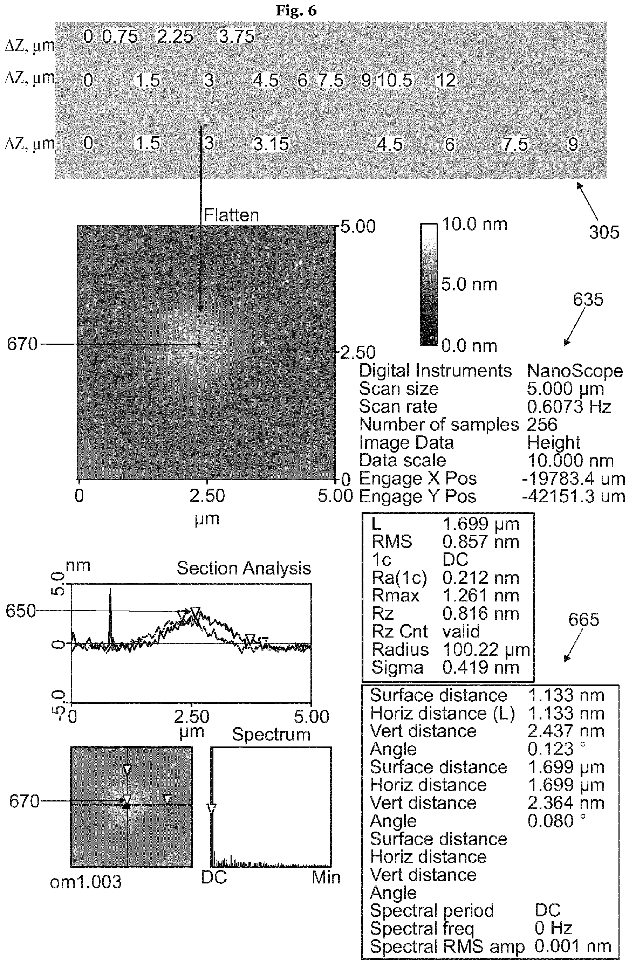

The upper partial image 305 of Fig. 6 depicts the upper partial image 305 of Figures 3 to 5. The partial image 635 of Fig. 6 presents the surface contour of the sample surface 143 at the position the laser beam periodically deposits energy packages of 25 nJ in a focus depth 265 of 3.0 µm. The partial image 635 is obtained by scanning the sample surface 143 with an AFM in the range of the focus point 135. Like the lower partial image 395 of Fig. 3, the lower partial image 665 of Fig. 6 presents the evaluation of the AFM scans as indicated in the middle partial image 635. A bump with a height of 2.4 nm and a width (FWHM) of 1.1 µm results at the position where light pulses 210-245 deposit energy packages of 25 nJ at a focus depth 265 of 3.0 µm below the sample surface 143.

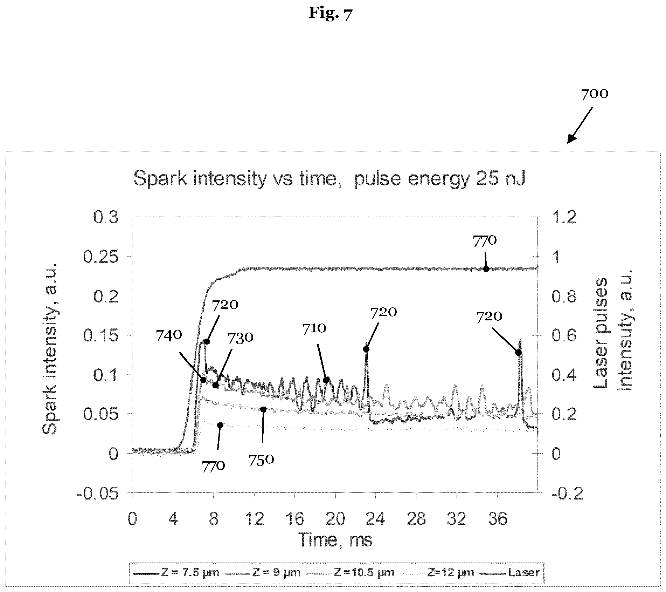

Diagram 700 of Fig. 7 presents the spark intensity as a function of the depth 265 into which the laser pulses 210-245 are written each one depositing energy packages of 25 nJ in the focal point 135. Curve 710 shows the optical radiation signal detected by the first photodetector 160 for a focal point depth 265 of 7.5 µm below the sample surface 143. The radiation signal 710 has three distinctive spark peaks 720 shortly after the local sample temperature begins to increase, at about 19 ms after beginning of the local sample heating at the focal point 135 in a focus depth 265 of 7.5 µm and approximately 32 ms after starting the sample heating at the focal point 135 by a sequence of laser pulses 210-245. The spark regions 720 or the spikes indicate dynamic periodic surface deformations. Between these periods of dynamic surface deformations, there are longer static periods in which the local surface contour is not changed or undergoes only a restricted surface contour variation during the laser irradiation.

Curve 730 representing a focus depth 265 of 9.0 µm which results in a not very pronounced spark 740 at the begin of the local sample heating process. Curves 750 for a focussing depth of 10.5 µm and curve 770 depicting an energy deposition depth of 12.0 µm show almost no spark but show a nearly constant optical radiation signal emitted by the sample 140 when local depositing a sequence of energy pulses 210-245 of 25 nJ below a focus depth 265 which is larger than 10 µm. The constant level of optical radiation emitted by the sample 140 reduces when focussing the energy deeper into the bulk sample 140. This is an indication that writing laser pulses 210-245 in a depth larger than 10 µm does not lead a significant local surface deformation during the laser illumination process.

Similar to Figures 4 and 5, curve 770 represents the laser pulse intensity and refers to the right ordinate in the diagram 700.

Figures 3 to 7 show that no spark signal is detected at the photodetector 160 when the laser intensity forms a crater at the sample surface 143. Further, these figures clearly reveal that the spark signal strongly depends on the deposited energy and the focus depth 265. Moreover, Figures 3 to 7 indicate that the spark intensity and the spark duration signal can be used as a feedback signal for controlling the local energy deposition process of focussed laser pulses 210-245.

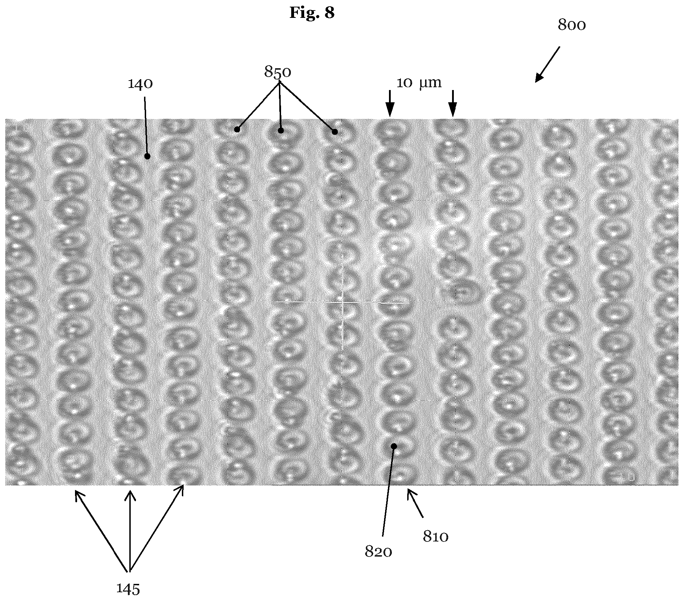

Diagram 800 of Fig. 8 presents a section of a sample 140 having a local change of a property 145 caused by inscribing sequences of laser writing pulses 210-245 in various positions along vertical lines 810 within the sample 140. Similar to Figures 3 to 6, diagram 800 shows a phase contrast image of light transmitting the sample 140.

In the example of Fig. 8, the local change of the property 145 of the sample 140 is a change of the refractive index of the sample 140 along the vertical lines or rows 810. For generating a vertical line 810 changing the property 145, each position along the lines 810 is irradiated by sequence of laser pulses 210-245 each one having an energy of 120 nJ. The light pulses are focused by an objective 130 having a magnification of 10x and an NA of 0.3. The short pulses are focused on a rate of 5.2 MHz in a certain depth into the sample 140. Possible focus depths 265 are discussed in the context of Figures 3 to 6. The distance between the different rows or lines 810 are about 10 µm.

In the example presented in Fig. 8, the sequence of laser pulses 210-245 locally heats the sample 140 can create a micro-void 820, or simply a void 820, which is also called a bubble 820 in this application. In diagram 800, the diameter of an individual micro-void 820 or bubble 820 is approximately 5 µm. In Fig. 8, the bubbles 820 manifests as local bumps on the sample surface 143. The real part of the refractive index of a bubble is significantly lower than within the sample 140. If it is assumed that a portion of the bubble 820 is free of sample material and the refractive index of the sample 140 amounts to 1.5, in principle, the generation of a bubble 820 can lead a local change of the real part of the refractive index of up to 30%. Thus, rows of bubbles 820 have the potential to act as a cladding layer which effectively may guide light by internal total reflection. In Fig. 8, the vertical rows 810 form cladding layers which guide light between them. As a consequence of the large refractive index variation between the rows 810 of adjacent bubbles 820 and the sample 140, the sample 140 may effectively guide light in the vertical direction. Thus, rows or sequences of adjacent bubbles 820 have the potential to generate waveguides which have a small bent radius. This allows to shrink the volume of photonic elements 190 realizing complex waveguiding structures.

It is possible to fabricate straight waveguides or straight portions of bent waveguides using conventional direct writing techniques which result in refractive index changes in a sample 140 of about 1%. Bent waveguides or bent portions of waveguides having small radii of curvature can be formed by generated sequences of adjacent bubbles 820 having a significantly higher refractive index change with respect to the refractive index of the sample material compared to conventional waveguides. Thus, by combining conventional direct writing waveguide formation and laser direct writing bubble generation, the manufacturing process of optical waveguides can be optimized and at the same time their light guiding capabilities can be improved.

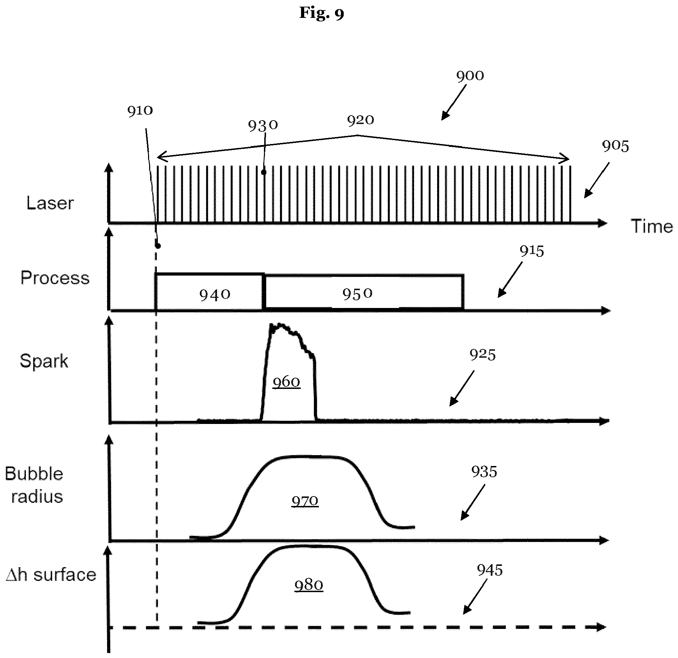

Diagram 900 of Fig. 9 provides an overview of various aspects of generating micro-voids 820 or bubbles 820 in a sample 140. The first partial image 905 presents a sequence 920 of laser pulses 930 which are inscribed into a sample 140. The laser pulses 930 may have a pulse width of 200 fs. The pulse repetition rate may be 5 MHz which means that the time interval between two pulses is 200 ns, i.e., the laser light source 105 emits 5000 pulses within 1 ms. The dashed vertical lines 910 specifies the start of the pulse sequence 920.

The second partial image 915 illustrates the processes of heating the sample 140 by heat accumulation 940 symbolized by the first block in the partial image 925. As demonstrated in Fig. 2, at the begin of the heating process, the temperature raises linearly at the focus point 135 as a function of time or the number of pulses as long as the interval between consecutive light pulses 930 is smaller than the cooling time of the sample material. When the temperature at the focal point 135 reaches a certain level, a bubble 820 begins to form at the focal point 135. This is symbolized by the second block 950 in Fig. 9. The temperature at which bubble formation starts depends on the sample material.

As can be seen in the third partial image 925 of Fig. 9, the start of the bubble formation correlates with the appearance of a spark intensity 960 emitted by the sample 140 at the focal point 135 detected by the first photodetector 160 of the apparatus 100 of Fig. 1. As already indicated, the temperature for changing a property of a sample 140, such as forming a bubble 820 depends on the material composition of the sample. Typical temperatures at which bubble formation starts are in a range of 1700 K to 5300 K.

The fourth partial image 935 of Fig. 9 schematically shows the size or diameter 970 of a bubble 820 in relation to the occurrence of the spark signal 960. Finally, the fifth partial image 945 depicts the local bump or local surface change 980 which is accompanied by the bubble formation in comparison to the diameter 970 of the generated bubble 820.

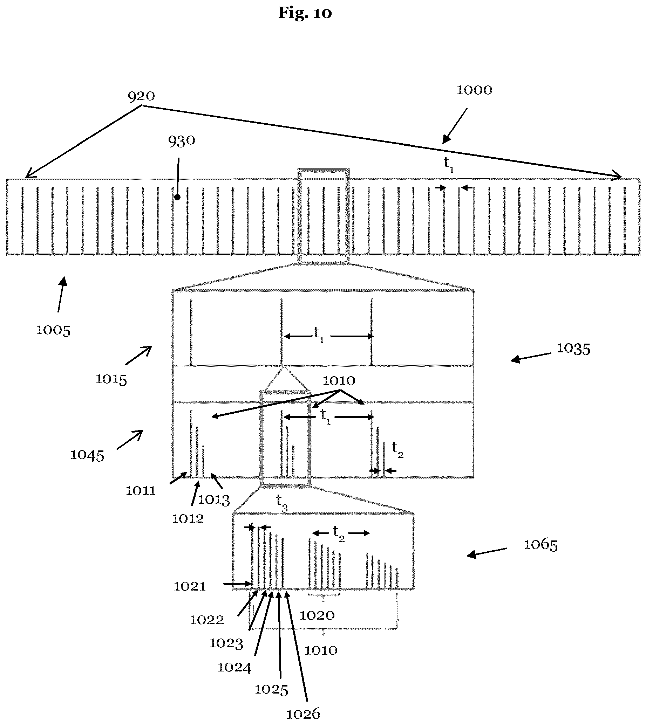

Diagram 1000 of Fig. 10 shows an exemplary sequence 920 of laser pulses 930 as a function of time in the upper partial image 1005. In the example of Fig. 10, the pulse repetition rate is 100 kHz which leads to a distance t1 = 10 µs between successive pulses 930. Second partial image 1035 presents in the upper part a section 1015 of the single pulse mode of the upper partial image 1005. The lower portion 1045 of the second or middle partial image 1035 shows the section 1010 having a burst mode 1050 wherein each pulse 930 of the section 1010 contains a sequence of three pulses 1011, 1012, 1013. The time t1 is the time between two consecutive (pulse) sequences 1010 and the time t2 is the time between two consecutive pulses 1011, 1012, 1013 in the burst mode. In the example of Fig. 10, the distance between two consecutive pulses 1011, 1012, 1013 within a pulse burst is t2 = 16 ns.

As illustrated in the lower partial image 1065 of Fig. 10, each (or at least one) of the pulses 1011, 1012, 1013 of the burst mode may comprise a sub-sequence 1020 comprising a plurality of sub-pulses 1021, 1022, 1023, 1024, 1025, 1026. The bi-burst mode of the partial image 1065 has a time of t₃ = 0.4 ns between two consecutive pulses in the sub- sequences 1020 which means that the bi-burst mode has a pulse repetition rate in the GHz regime.

In the example of Fig. 10, the envelope of the sequence 1010 or the burst mode as well as of the optional sub-sequences 1020 or the bi-burst mode is controlled to monotonically decrease the intensity of successive pulses within each sequence 1010 and within each sub-sequence 1020.

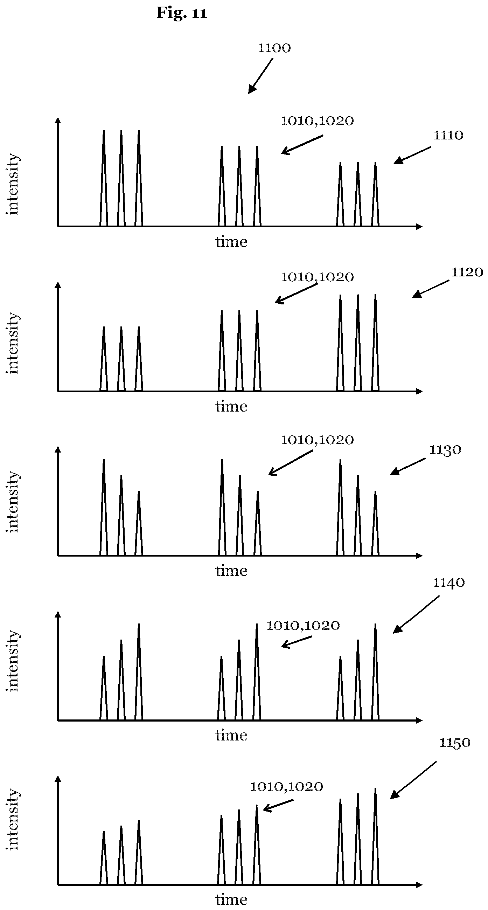

Diagram 1100 of Fig. 11 schematically depicts five exemplary ways of controlling the sequence envelope. The shown concept may analogously be applied to an envelope control of a sequence 1010 (or a burst mode) and/or a sub-sequence 1020 (or a bi-burst mode) as described herein.

The first panel 1110 shows that the intensity for all pulses is constant within a (sub-) sequence 1010, 1920, but decreases monotonically for the next (sub-)sequence(s) 1010, 1020.

The second panel 1120 shows that the intensity for all pulses is constant within a (sub-) sequence 1010, 1020, but increases monotonically for the next (sub-)sequence(s) 1010, 1020.

The third panel 1130 shows that the pulse intensity decreases monotonically within a (sub-) sequence 1010, 1020, wherein subsequent (sub-)sequences 1010, 1020 have the same envelope.

The fourth panel 1140 shows that the pulse intensity increases monotonically within a (sub-) sequence 1010, 1020 wherein subsequent (sub-)sequences 1010, 1020 have the same envelope.

Finally, the fifth panel 1150 shows that the pulse intensity increases monotonically within a (sub-) sequence 1010, 1020 and increases monotonically across subsequent (sub-)sequences 1010, 1020 for a predetermined number of subsequent (sub-)sequences 1010, 1020 (in this example three).

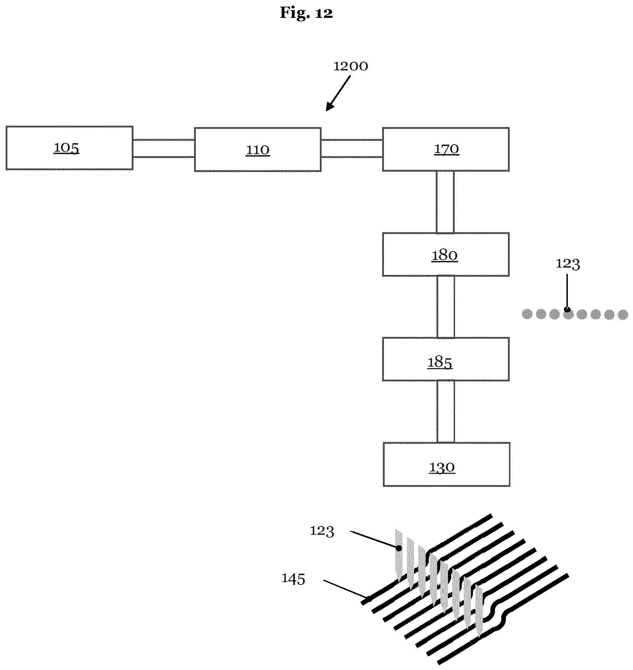

Fig. 12 schematically depicts a block diagram of some essential components of an apparatus 1200 which is designed for generating a photonic element 190 by simultaneously using a multiplicity of laser direct writing beams 123 containing at least two laser direct writing beams 123. The apparatus 1200 comprises a laser light source 105 or laser beam source 105 which is discussed in the context of Fig. 1. Further, the apparatus 1200 comprises a beam shutter 110. This component is also already described above. Moreover, the apparatus 1200 comprises a beam splitting unit 180 which splits the beam emitted by the laser light source 105 into a multiplicity of laser direct writing beams 123. In the example depicted in Fig. 12, the splitting unit 180 splits the beam or the original beam into eight laser direct writing beams 123 arranged in a line or row of beams 123 having a predetermined distance to the neighboring beam 123. It is also possible that the beam splitting unit forms a 2D array of laser direct writing beams 123 from the original laser beam. Parallelizing the processing of a sample 140 for generating a photonic element 190 accelerates the manufacturing process of photonic elements 190.

The apparatus 1200 has a light beam modulator 185 or a beam modulator array 185. This component may individually set one or more parameters of each one of the multiplicity of beams 123 entering the beam modulator array 185. Details of the operation of the beam modulator array 185 are discussed in the context of Fig. 1. The beam modulator array 185 significantly enhances the capabilities of the apparatus 1200 for generating photonic elements 190 having complex structure elements 145, such as optical waveguides 145.

Finally, a control unit 170 is designed to control all essential components of the apparatus 1200. The control unit 170 or a computer 175 or a computer system 175 may comprise algorithms realized in hardware, software, firmware or a combination thereof for automatically focusing a plurality of laser direct writing beams 123 into a sample 140, automatically moving the plurality of laser direct writing beams 123 relative to the sample 140, and automatically individually controlling and setting one or more parameters of each one of the plurality of laser direct writing beams 123 for processing the sample 140. In addition to or instead of one or more algorithms, a computer program may have instructions which cause the apparatus 1200 to perform the steps indicated in the previous sentence.

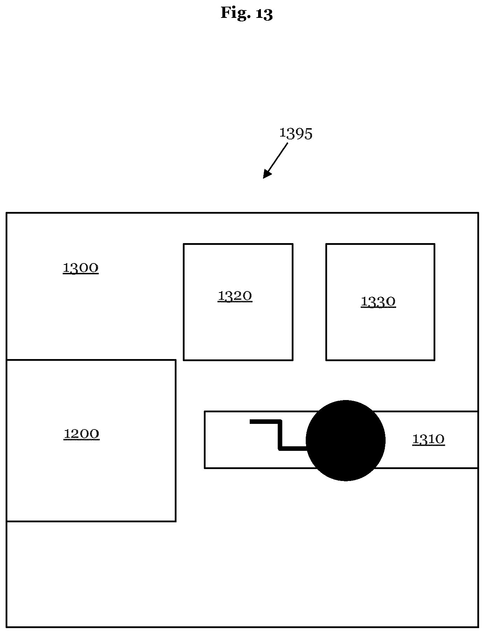

Diagram 1395 of Fig. 13 presents a block diagram of an apparatus 1300 which combines or integrates the apparatus 100, 1200 for generating a photonic element 190 by parallelizing the use of a plurality of laser direct writing beams 123. The apparatus 1300 further includes at least one metrology module or unit. This (These) metrology unit(s) is (are) configured to determine the change of the at least one property of a sample 140 modified by the apparatus 1200 to fabricate a photonic element 190 from the sample 140. In the example of Fig. 13, the apparatus 1300 comprises a first metrology unit 1320 and a second metrology unit 1330. The first metrology unit 1320 may be configured to determine whether the generated photonic element 190 meets one or more predetermined characterizing quantities. The second metrology unit 1330 may comprise measurement equipment for measuring specific quantities of the generated photonic element 190. Hence, the second metrology unit 1330 may be used for controlling and setting the manufacturing part 100, 1200 of the apparatus 1300. For example, if the photonic element 190 is an optical waveguide structure, the second metrology unit 1330 may determine the mode field diameter (MFD) of the various waveguides, their coupling losses, their propagation losses along straight and/or bent waveguides.

A robot 1310 or a robot system 1310 of the apparatus 1300 may convey a sample 140 to the apparatus 1200 and a photonic element 190 generated from the sample 140 from the apparatus 1200 to the metrology units 1320 and 1330 for its analysis. The integrated apparatus 1300 may run in batch operation, und thus may optimize the cycle time for generating and testing of photonic elements 190.

When designing the apparatus 1200 for generating predominantly identical photonic elements 190, such as optical waveguides 190, it may be useful to integrate the generating apparatus 1200 and the metrology units 1320 and 1330 in one system. On the other hand, if the apparatus 1200 is primarily designed for flexibly manufacturing different kinds of photonic elements 190, the apparatus 1300 may be construed as a hybrid system which increases the flexibility to be easily adapted for analyzing various king of fabricated photonic elements 190.

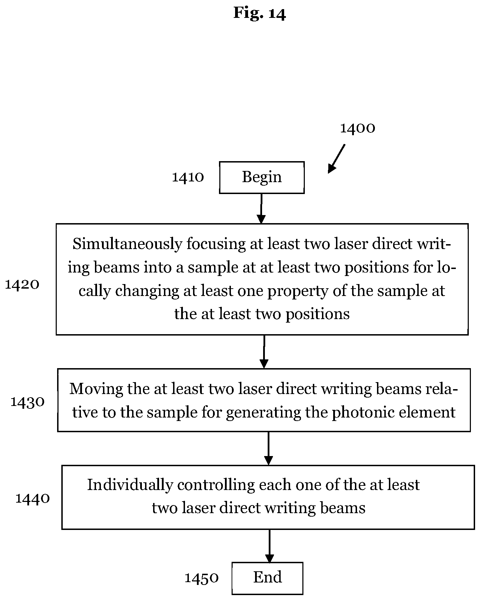

Finally, Fig. 14 shows a flow chart 1400 of a method for generating a photonic element 190 using at least two laser direct writing beams 123. The method begins at 1410. At step 1420, the at least two laser direct writing beams 123 are focussed into a sample 140 for locally changing at least one property 145 of the sample 140. For example, the property 145 to be locally changed may be the refractive index of the sample 140 to fabricate an optical waveguide as an exemplary photonic element 190. In an example, the property of the sample 140 may be changed by generating rows or sequences of adjacent micro-voids 820 or bubbles 820 which may act as cladding layers of optical waveguides. This step may be performed by the control unit 175 of the apparatus 100 or 1200 of Figures 1.

At step 1430, the at least two laser direct writing beams 123 are moved relative to the sample 140 for generating the photonic element 190. Further, at step 1440, each one of the at least two laser direct writing beams 123 is individually controlled. The control unit 170 of the apparatus 100, 1200 is also designed for performing this method step. The method ends at 1450.

## Claims

1. A method for generating a photonic element by simultaneously using at least two laser direct writing beams, comprising:
a. simultaneously focussing the at least two laser direct writing beams into a sample at at least two positions for locally changing at least one property of the sample at the at least two positions;
b. moving the at least two laser direct writing beams relative to the sample for generating the photonic element; and
c. individually controlling each one of the at least two laser direct writing beams.

2. The method of claim 1, wherein the photonic element comprises at least one element of: an optical waveguide, a microlens, a photonic coupling element, a wavelength selective element, a tapered waveguiding structure, at least one diffraction optical element, an expanded waveguiding structure, or a fiber alignment structure.

3. The method of claim 1 or 2, wherein the at least one property comprises at least one of: a local refractive index change, a local material density change, a local material composition change, a local surface change, or a local front side change.

4. The method of any one of the preceding claims, wherein moving the at least two laser direct writing beams relative to the sample comprises at least one of: continuously moving the sample relative to the at least two laser direct writing beams, discontinuously moving the sample relative to the at least two laser direct writing beams, or a combination of both.

5. The method of any one of the preceding claims, wherein the photonic element comprises at least one of: a straight optical waveguide, a bent optical waveguide, a tapered optical waveguide, or an expanded optical waveguide.

6. The method of any one of the preceding claims, wherein the at least two laser direct writing beams cause a refractive index change in the sample of at least 0.5%, preferably of at least 1.0%, more preferably of at least 2.0%, and most preferably at least 3.0%.

7. The method of any one of the preceding claims, wherein individually controlling each one the at least two laser direct writing beams comprises at least one of: individually setting an optical intensity of each one of the at least two laser direct writing beams, individually setting a phase of each one of the at least two laser direct writing beams, individually setting a focus depth of each one of the at least two laser direct writing beams, individually setting a polarization of each one of the at least two laser direct writing beams, or individually setting a lateral distance between the at least two laser direct writing beams.

8. The method of any of the preceding claims, wherein the at least one photonic element comprises at least one sequence of adjacent bubbles arranged in at least one of: a straight line, a curved line or both.

9. The method of the preceding claim, wherein the at least one photonic element comprises at least four sequences of adjacent bubbles acting as cladding layers limiting the at least one optical waveguide at a left, right, bottom, and top side.

10. The method of claim 8 or 9, wherein controlling a bubble size comprises at least one of: controlling a pulse energy of the pulses of the at least two laser direct writing beams, controlling a number of pulses focused onto one position, or controlling a numerical aperture (NA) of a focussing objective.

11. The method of any one of the preceding claims, further comprising detecting the change of the at least one property of the sample.

12. The method of the preceding claim, wherein detecting the change of at least one property of the sample comprises detecting optical radiation originating from at least one of the at least two positions during focussing the at least two laser direct writing beams into the sample.

13. The method of any one of the preceding claims, further comprising designing the sample to be operable as a substrate in a co-packaged optics.

14. A computer programme having instructions causing a computer system to perform any of the method steps of the claims 1 to 13.

15. A photonic element generated according to a method of any one of the claims 1 to 13.

16. A substrate having a photonic element according to claim 15.

17. A co-packaged optics module having a substrate according to claim 16.

18. An apparatus for generating a photonic element by simultaneously using at least two laser direct writing beams, the apparatus comprising:
a. means for providing at least two laser direct writing beams;
b. means for individually controlling each one of the at least two laser direct writing beams;
c. at least one displacement unit operable to move the at least two laser direct writing beams relative to the sample for generating the photonic element; and
d. at least one control unit having instructions which, when executed, control the apparatus to automatically generate the photonic element.

19. The apparatus of the preceding claim further comprising at least one metrology unit operable to detect the change of the at least one property of the sample.

20. The apparatus of claim 18 or 19, further comprising at least one of: a shutter operable to block the at least one laser direct writing beam, an objective operable to focus the at least two laser direct writing beams into the sample, a beam expanding unit operable to laterally expand the at least one laser direct writing beam, a microlens array operable to image the at least two laser direct writing beams, a dichroic mirror operable to direct the at least two laser direct writing beams to the at least one objective and/or to direct optical radiation emitted from the sample towards at least one first photodetector, a second photodetector operable to detect the at least one laser direct writing beam, or a wavelength filter operable to select a wavelength range of the optical radiation originating from the sample for detection by the at least one first photo detector.

21. The apparatus of any of claims 18-20, wherein the at least one beam modulator array comprises at least one array of individually controllable elements operable to set at least one of: an optical intensity of the at least two laser direct writing beams, a polarization of the at least two laser direct writing beams, a focus depth of the at least two laser direct writing beams, or a phase of the at least two laser direct writing beams.
